# EUROPEAN PATENT SPECIFICATION

(11) **EP 4 022 229 B1**
(45) Date of publication and mention of the grant of the patent: **26.03.2025**
(21) Application number: 20761816.6
(22) Date of filing: 25.08.2020
(51) Int. Cl.: F24H 7/04, F24H 9/00, F24H 15/35, F24H 15/37, F24H 15/20, F24H 15/238, F24H 15/219, F24H 15/33, F24H 9/20

(54) **A STORAGE BOILER**
SPEICHERKESSEL
CHAUDIÈRE DE STOCKAGE

(30) Priority: 29.08.2019 GB 201912424
(43) Date of publication of application: 06.07.2022
(73) Proprietor: Tepeo Ltd, Wokingham RG41 5TP (GB)
(72) Inventor: DU PLESSIS, Johan, Winnersh, Wokingham RG41 5TP (GB); CARVER, Christopher, Winnersh, Wokingham RG41 5TP (GB); KILLASPY, George, Winnersh, Wokingham RG41 5TP (GB)
(74) Representative: Boult Wade Tennant LLP
(86) International application number: PCT/EP2020/073770
(87) International publication number: WO 2021/037865

(56) References cited:
- EP-A1- 0 038 304
- DE-A1- 2 129 850
- GB-A- 1 208 773

## Description

### Technical Field

The present invention is directed towards a storage boiler and a method of operating a storage boiler.

### Background

Storage boilers, also referred to as dry core storage boilers, heat banks, heat batteries or zero emission boilers, convert electrical energy into heat using electrical heating elements or resistive heating elements and store the heat in a storage medium located in a core. The heat is usually transferred from the storage medium by a fan driving air between the core and a heat exchanger in a closed loop. The heat exchanger transfers the heat to a water and/or central heating system for delivering heated water as required. Typically the storage boilers consume electrical power at times of low demand (or excess generation) across an electricity grid or network, such as during the night, when it has a lower cost. Increasingly this can occur at any time of day due to the increase in generation from renewable sources. In order to store large amounts of heat and have high heat transfer rates in the core, it is generally desirable for the storage medium to have high thermal conductivity and high heat storage density (i.e. a high specific heat capacity and high material density). Further requirements are for the storage medium to have limited thermal expansion and to be low cost. EP0029010B1 and EP0038305B1 disclose typical storage boilers in which the storage medium comprises refractory bricks. Such refractory bricks are commonly used due to their relatively low cost and ease with which they can be formed in different structural shapes. However, refractory bricks generally comprise a binding agent, such as clay, or are manufactured using certain production methods such as clay firing, which decrease their overall heat storage density as compared to the raw heat storage material. GB1377907A proposes increasing the heat storage density by packing a first heat storage material in lumpy form in a casting mould and pouring a second heat storage material into the mould to fill the residual cavities in the first heat storage medium. However, the method of GB1377907A involves additional processing steps and the rest of the core has to be designed around the shape of the moulded heat storage material.

In order to improve the power output of the storage boiler it is desirable to have high air flowrates and effective transfer of heat from the heat storage medium to the air. The air circulation systems of EP0029010B1 and EP0038305B1 aim to achieve the latter by having the air directly contact the storage medium. However, the systems therefore require chambers before and after the refractory bricks for the distribution of air to and collection of air from the refractory bricks. High pressure drops result due to high turbulence at the sharp changes in fluid direction such that the air circulation fan produces a lower flowrate, thereby limiting the power output of the storage boiler.

In EP0029010B1 and EP0038305B1 throttle valves are used to control the air flowrate and thus control the power output. The temperature of the air contacting the heat exchangers is not directly controllable and the maximum temperature allowable in the core (650°C in EP0029010B1 and EP0038305B1) must be set according to the temperature ratings of the other components of the air circulation loop. In particular, the maximum temperature of the air exiting the core must be set in correspondence with the maximum temperature rating of the heat exchanger, which directly receives hot air from the core. Thus the maximum temperature of the air exiting the core is limited and the power output of the storage boiler is limited. In systems such as those of EP0029010B1 and EP0038305B1, the refractory bricks can be operated at a temperature higher than the maximum temperature rating of the heat exchanger because the bricks have low thermal conductivity and thus do not raise the temperature of the air to the temperature of the refractory bricks (i.e. the temperature difference between that of the bricks and the transfer fluid is high). Instead, the air is only raised to a lower temperature that is below the maximum temperature rating of the heat exchanger.

DE2129850A1 discloses an electric storage heater with finned heat exchanger for allowing infinitely variable heat control by using flap valve. EP0038304A1 discloses a method of controlling a heating apparatus and a heating apparatus controlled by this method, the apparatus comprising an accumulation block heated by resistances. GB1208773A, entitled "Improvements in Storage Heaters," discloses a storage heater comprising a storage core, a main air flow passage for air to be heated by the core, a by-pass passage, a fan casing in circuit with both passages, a valve for apportioning air between the passages, and a fan for recirculating air through the passages.

### Summary

Objects of the present invention include addressing these problems and providing an improved storage boiler. A particular object is to provide a heat storage medium that has a low cost, a high thermal conductivity and a high heat storage density. A further object is to provide a storage boiler with a more consistent and improved power output across a range of core temperature. The storage boiler of the present invention is preferably a domestic storage boiler for domestic use and may be referred to as a dry core storage boiler.

The present invention provides a storage boiler and method in accordance with the claims.

The storage boiler comprises a base to which the core is mounted. The bypass arrangement is for mixing cooled transfer fluid with heated transfer fluid prior to the mixed transfer fluid entering the heat exchanger. The bypass arrangement is mounted inside the base. The storage boiler comprises a control system configured to operate the fan, by varying the speed of the fan, for controlling the flowrate of transfer fluid through the core and fluid system. The control system is configured to operate the bypass arrangement for controlling the flowrate of transfer fluid through the bypass arrangement.

The bypass arrangement can be operated to control the temperature of the transfer fluid entering the heat exchanger, which is therefore substantially independent of the temperature of the core. As a result, the core can be operated at high temperatures independently of the heat exchanger temperature value and temperature rating of the heat exchanger. The temperature difference between the core and the transfer fluid exiting the core can thus be low. As the temperature of the core is reduced, the temperature of the transfer fluid exiting the core reduces closer to the temperature rating of the heat exchanger. The bypass arrangement can be operated to reduce the bypass flowrate such that the temperature of the transfer fluid entering the heat exchanger is maintained at a heat exchanger temperature value, which may be the temperature at which the heat exchanger operates at substantially maximum power output. Thus maximum power output can be achieved across a range of core temperatures. A heat storage medium with high heat storage density, which stores a substantial amount of heat at a relatively high temperature, can therefore also be selected.

The storage boiler of the present invention may comprise a heat storage medium comprising an aggregate bed of material elements.

The storage boiler of the present invention may comprise a fluid system comprising at least one fluid conduit comprising at least one core fluid passageway extending through the core for receiving transfer fluid.

The storage boiler of the present invention may comprise an electrical system comprising at least one heating element at least partially located in the core for directing heat to the heat storage medium from at least one heating element. The heat storage medium may be sealed from the heating elements and transfer fluid. In particular, the storage boiler may comprise at least one element conduit extending at least partially, preferably entirely, through the core chamber and the at least one heating element may be at least partially located in the at least one element conduit. The at least one element conduit may be sealed to the core housing. The heat storage medium, preferably comprising the aforementioned aggregate bed of material elements, may be distributed at least partially around and in contact with the, preferably exterior of, at least one element conduit.

The storage boiler of the present invention may comprise (a) an inlet distributor for distributing transfer fluid prior to entry into the core, preferably prior to entry into a plurality of the core fluid passageways and/or (b) at least one distribution baffle located downstream of the core, preferably in a heated fluid passageway extending from the core, preferably from at least one core fluid passageway, to the heat exchanger. The method may further comprise (a) directing transfer fluid through the inlet distributor to distribute transfer fluid between the core fluid passageways and/or (b) directing transfer fluid through the at least one distribution baffle to distribute the transfer fluid from at least one core fluid passageway prior to entry into the heat exchanger.

It will be appreciated from the foregoing that the storage boiler and method of operating a storage boiler in accordance with the present disclosure may comprise the bypass arrangement or a combination of the bypass arrangement and the aggregate bed, fluid conduit(s), electrical system, inlet distributor, distribution baffle(s) and/or any other features disclosed herein. For example, the storage boiler may comprise a bypass arrangement and a core comprising refractory bricks as in the prior art and the fan may circulate the transfer fluid through the refractory bricks rather than any fluid conduits. However, as will be apparent, a combination results in a substantially improved storage boiler. In particular, the bypass arrangement allows for a heat storage medium to operate at a particularly high temperature. The aggregate bed is also an appropriate manner of including a material with a high thermal conductivity and the fluid conduits can be formed from a material with a high thermal conductivity, such that there is a low temperature difference between core and transfer fluid exiting the core. Thereby, in combination with the bypass arrangement, the heat exchanger can operate at maximum power across a wide range of core temperatures.

### Brief Description of the Drawings

By way of example only, embodiments of a storage boiler, methods of operating a storage boiler and methods of manufacturing a storage boiler in accordance with the present invention are now described with reference to, and as shown in, the accompanying drawings, in which:
Figure 1 is a perspective, partial cross-sectional, view of a storage boiler in accordance with the present invention with a portion of heat storage medium hidden;
Figure 2 is a front cross-sectional view of the storage boiler of Figure 1 with the heat storage medium hidden;
Figure 3 is a front cross-sectional view of a further embodiment of a storage boiler of the present invention with a heat storage medium hidden;
Figure 4 is a top perspective cross-sectional view of the storage boiler of Figure 3 with the surfaces of a core housing and the heat storage medium hidden from view;
Figure 5 is a bottom perspective cross-sectional view of the storage boiler of Figure 3;
Figure 6 is a cross-sectional side view of the storage boiler of Figure 3; and
Figure 7 is a graph showing power output against core temperature for the storage boiler of the present invention and for a prior art storage boiler.

### Detailed Description

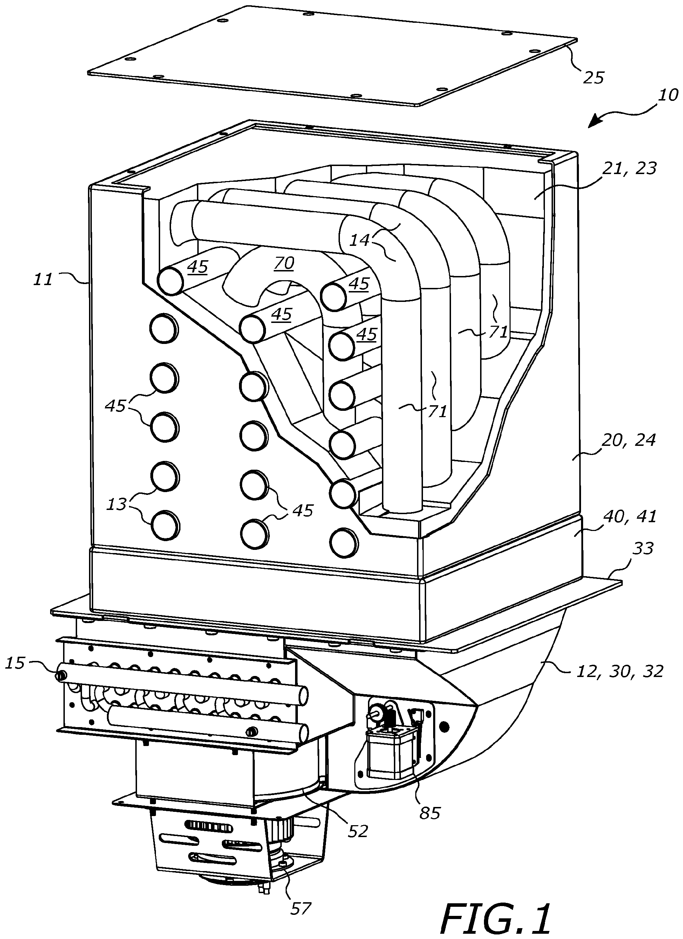

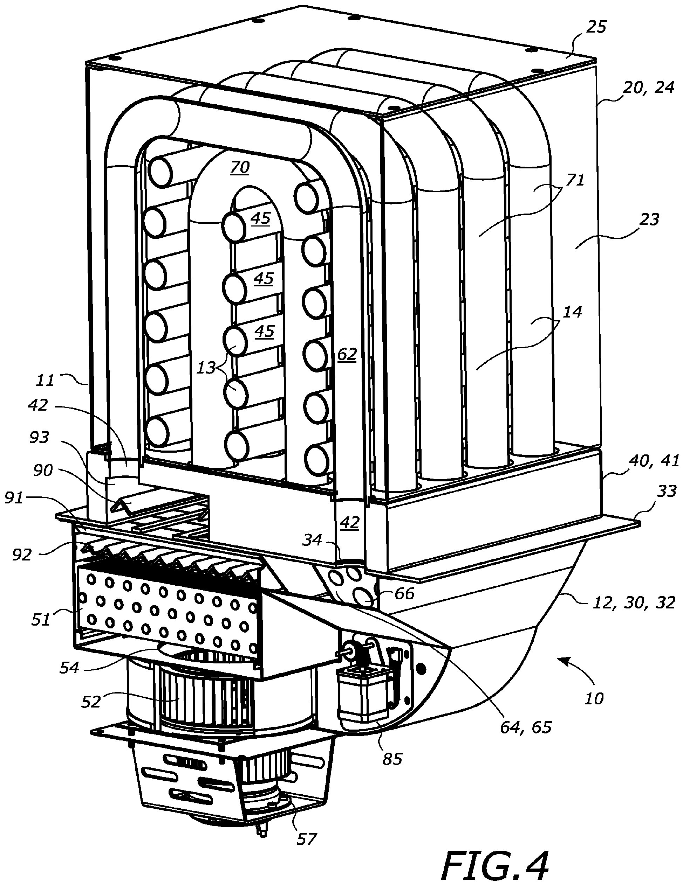

Figures 1 and 2 and Figures 3 to 6 illustrate, respectively, first and second embodiments of a storage boiler 10 in accordance with the present invention. Unless otherwise specified, the following description generally applies to both embodiments. The storage boiler 10 comprises a core 11 mounted to a base 12 and an electrical system 13 extending into the core 11 for providing heat thereto. The storage boiler 10 further comprises a fluid system 14 extending through the core 11 and base 12 for heating a transfer fluid in the core 11, for circulating the heated transfer fluid between the core 11 and the base 12 and for extracting the heat from the transfer fluid for supply to an external heat demand system 15, such as a domestic hot water circuit or domestic central heating system.

The core 11 comprises a core housing 20 and a heat storage medium 21 within the core housing 20. The core housing 20 may comprise or define a core chamber 23 within it and in which the heat storage medium 21 is located or dispersed. The core chamber 23 may be a sealed chamber, in particular sealed from the environment external to the core 11 and/or storage boiler 10 such that gas cannot be communicated into or out of the core chamber 23. The core housing 20 preferably comprises a non-oxidising material, such as stainless steel. As illustrated, the core housing 20 may be substantially cuboidal such that the core chamber 23 is also substantially cuboidal and may comprise an open core main housing 24 and a lid 25 to seal the opening of the core main housing 24. The lid 25 may be removable for access to the core chamber 23 for maintenance. However, the core housing 20 and core chamber 23 may have any other suitable shape and/or construction.

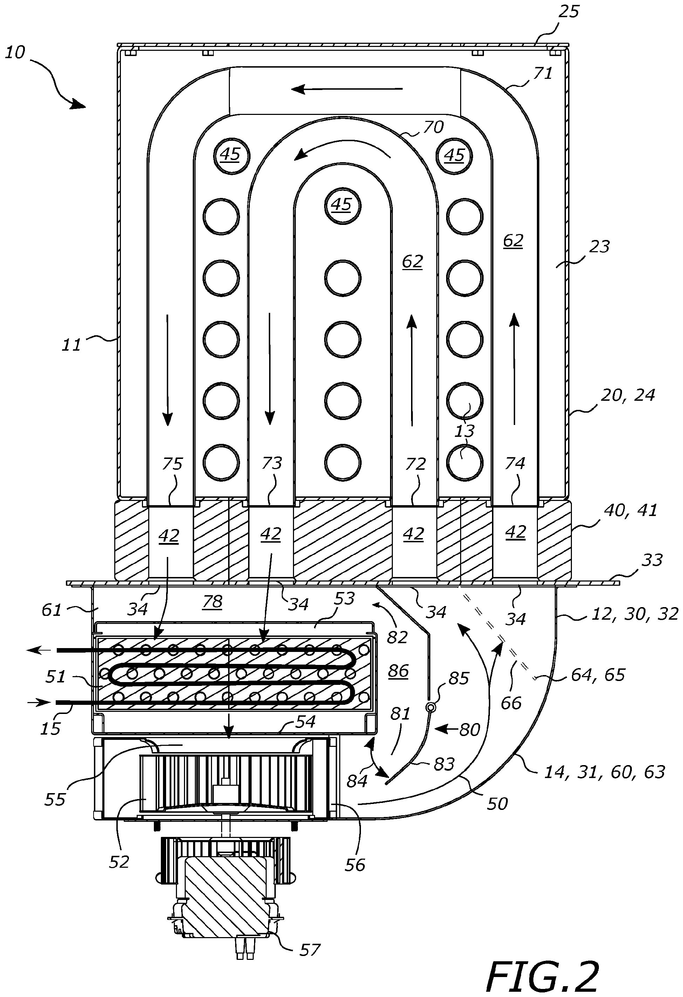

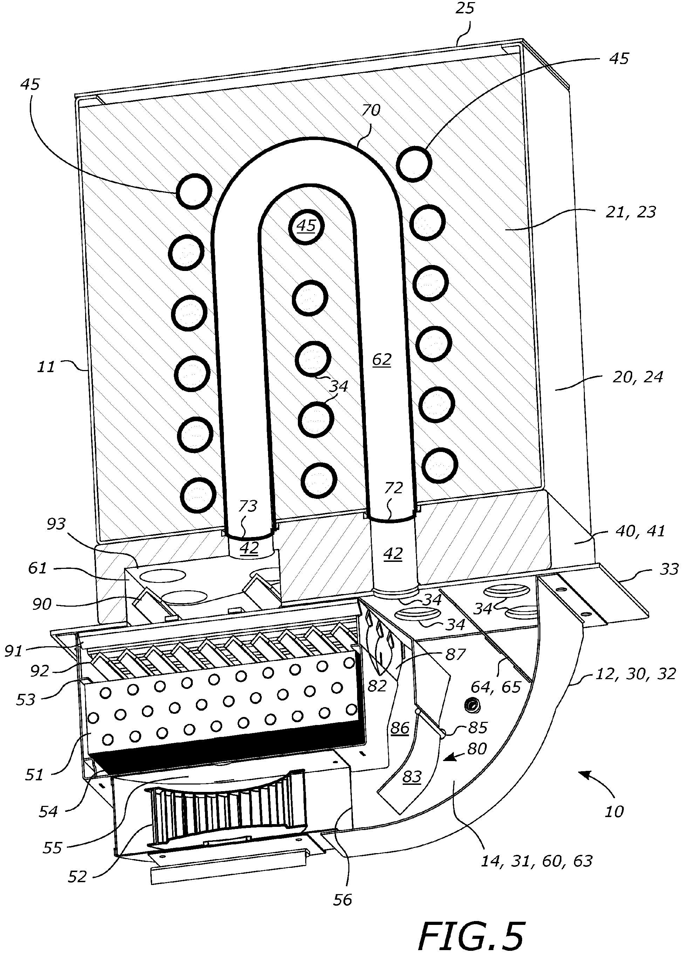

The heat storage medium 21 preferably comprises an aggregate bed of material elements as illustrated. For example, the heat storage medium 21 may comprise a plurality of steel fragments and/or magnetite dust. The heat storage medium 21 is partially illustrated in Figure 1, illustrated in cross section in Figure 5 and hidden in Figures 2 to 4 and 6. In the present disclosure the term "aggregate bed" refers to a plurality of material elements that are loosely and/or randomly distributed in the core chamber 23. The aggregate bed may be an agglomeration of discrete, unfused and disjoined material elements. The material elements may thus be poured into the core chamber 23. The aggregate bed is supported from the lowermost surface of the core chamber 23 and may fill at least approximately 75% or at least approximately 90% of the volume of the core chamber 23. The aggregate bed is substantially different from refractory bricks, which are large bricks stacked regularly and non-randomly upon one another. The aggregate bed may be compacted, such as on a vibration platform or by tamping.

The material elements may comprise particles, fragments, small bodies and/or the like. The particles may be in powder and/or fine form. The fragments may be offcuts or recycled materials from other material processes, particularly metal processing industries. Thus the fragments may comprise punchings, shot, shavings, grit, small irregular sheets and the like. The small bodies may comprise balls, cubes, irregular shapes and the like.

The average maximum diameter of the material elements (which may be the average of all of the maximum dimensions of the material elements) is preferably up to approximately 10 mm, approximately 20 mm or approximately 50 mm and/or at least approximately 0.1 mm, approximately 0.4 mm or approximately 1 mm.

The material elements comprise a heat storage material, which may be a medium capable of storing thermal energy, principally by sensible heat storage (or antiferromagnetic and eutectoid transition effects discussed herein below), for extraction at a later time. The material elements may comprise different heat storage materials. At least approximately 25% or 50% of the volume of the heat storage medium 21 may comprise the same heat storage material. The heat storage material may not be a phase change material, may comprise an oxidising material and is solid. The material elements may comprise a metal and may comprise at least one of an iron oxide and/or a ferrous metal or iron alloy (preferably with at least 90 wt% or 95 wt% iron content and/or up to 4 wt% carbon content). The iron oxide may comprise magnetite (Fe3O4), hematite (Fe2O3), wüstite (FeO) and/or any other suitable iron oxide. The iron alloy may comprise cast iron (e.g. 2 to 6.7 wt% carbon), a steel, a carbon steel (e.g. 0.1 to 2 wt% carbon content), a stainless steel and/or 430 series (according to the SAE designations, or corresponding to EN steel grade 1.4016) ferritic stainless or chrome iron (which may have iron content in the range of 75-80% and a high chromium content, such as 16-18 wt%). Carbon steel (preferably a carbon steel in accordance with the definitions thereof set by AISI) is particularly preferably due to its high specific heat capacity and high thermal conductivity. The use of carbon steel means that the volume of the heat storage medium 21 can be reduced for domestic use. Low carbon steel (e.g. less than 0.3 wt% carbon content) may be preferable due to its relatively low cost. The carbon steel may not be stainless steel by having a low chromium content.

The material elements may comprise an iron alloy, preferably carbon steel or cast iron, that forms austenite above a eutectoid or austenite transition temperature and during operation of the storage boiler 10 the temperature of the material elements may be raised (by the electrical system 13) to at least the eutectoid temperature. At the eutectoid temperature, when the iron alloy crystalline structure transitions from body centre cubic to face centre cubic to form austenite, a significant amount of energy is absorbed and thus the iron alloy has a significant increase in specific heat capacity when heated above the eutectoid temperature. In particularly preferred embodiments at least a portion of the material elements comprises an iron alloy having a eutectoid or near-eutectoid composition. The eutectoid composition is the iron alloy composition at which the transition is directly to austenite without intermediate structures in between. The term "near eutectoid" refers to the carbon composition being within 0.8 wt% of that of the eutectoid composition. Preferably the carbon steel comprises a eutectoid composition of approximately 0.83 wt% carbon with a eutectoid temperature of approximately 723°C or is a low carbon steel (e.g. 0.3 wt% carbon) with an austenite transition temperature in the range of approximately 723°C to approximately 875°C.

The material elements may comprise an iron oxide, preferably magnetite or hematite, and during operation of the storage boiler 10 the temperature of the material elements may be raised to at least a predetermined material temperature. The predetermined material temperature may be a temperature at which the heat storage material exhibits an increase in specific heat capacity, due to a reversible antiferromagnetic transition and/or a transition to austenite as discussed above. The predetermined material temperature may be between approximately 550°C and approximately 700°C and may be approximately 570°C for magnetite and approximately 690°C for hematite.

The heat storage medium 21 preferably comprises first material elements and second material elements, which may each comprise different heat storage materials. The second material elements may have a lower average maximum diameter than the first material elements. As a result, the second material elements may fill spaces or voids between the first material elements, thereby increasing the overall density and thus heat storage density of the heat storage medium 21. Preferably the first material elements comprises fragments or small bodies and the second material elements comprise a powder. Thus the average maximum diameter of the first material elements may be in the range of approximately 1 mm to approximately 50 mm and the average maximum diameter of the second material elements may in the range of approximately 0.1 mm to approximately 1 mm. Preferably the first material elements comprises steel (e.g. punchings or shot) and the second material elements comprises an iron oxide such as magnetite or hematite (e.g. in fine powder form). The heat storage medium 21 may comprise third and onwards sets of material elements. The first and/or second material elements may each occupy at least approximately 5%, 10%, 25% or 50% of the total volume of the heat storage medium 21.

The base 12 comprises a base housing 30 defining an internal base chamber 31 through which the fluid system 14 extends. The base chamber 31 may be a sealed chamber. The base housing 30 may comprise an open base main housing 32 and a mounting plate 33 mounted to the opening of the base main housing 32. At least one base passageway 34 may extend through the base housing 30, preferably through the mounting plate 33, for allowing fluid communication between the base 12 and the core 11.

The storage boiler 10 may further comprise an insulation arrangement 40 located between and mounted to the base 12 and core 11 for insulating the components in the base 12 from the heat of the core 11. The insulation arrangement 40 may be mounted to and between the base housing 30, preferably to the mounting plate 33 thereof, and the core housing 20, preferably the core main housing 24 thereof. Preferably the insulation arrangement 40 comprises at least one insulation block 41, which may be formed from, for example, calcium silicate or microporous board. Insulation passageways 42 may extend through the insulation arrangement 40, preferably entirely therethrough, to allow the communication of fluid between the core 11 and the base 12. The insulation passageways 42 may be aligned with the at least one base passageway 34. In other embodiments the core 11 may be mounted directly to the base 12.

Although not illustrated in the Figures, the storage boiler 10 may further comprise an external housing and/or external insulation around at least the core 11. In particular, the storage boiler 10 may comprise external insulation extending around at least the majority of, and preferably substantially all of, the core housing 20. The external insulation may comprise a plurality of insulation boards located around the sides and top of the core housing 20, preferably with overlapping corners to minimise heat bridging. The external insulation may also comprise a thin layer of mineral wool or the like between the insulation boards and the external housing.

The electrical system 13 comprises heating elements (not illustrated) for supplying heat to the heat storage medium 21 of the core 11. The heating elements may receive electricity from an external power source (not illustrated), such as an electricity grid or network, and may comprise electrical resistive heating elements for converting electrical power into heat. The heating elements preferably comprise electrical elements or coils for receiving electrical power, each mounted inside a nonconductive sheath, which may, for example, comprise ceramic. The heating elements are sealed from the core chamber 23 such that they do not contact the heat storage medium 21.

As illustrated, the electrical system 13 may comprise element conduits 45 extending at least partially through, preferably entirely between opposing sides of, the core chamber 23 and at least one heating element in each element conduit 45. The hollow interior of each element conduit 45 is preferably sealed from the core chamber 23. The element conduits 45 are mounted, preferably at both of ends, to the core housing 20. The element conduits 45 are accessible from, such as by at least one end of the element conduits 45 being open at, the exterior of the core housing 20 such that the heating elements can be accessed easily for maintenance. The storage boiler 10 may comprise at least five or at least ten element conduits 45 and/or heating elements located therein. The element conduits 45 may be arranged in an array such as in at least one row of substantially parallel element conduits 45 as illustrated. The element conduits 45 may be spaced vertically from one another along the row and may be substantially horizontal. Preferably the each heating element is elongate and extends along at least 50%, at least 75% or at least 90% of the length of the element conduit 45 in which it is located.

The element conduits 45 comprise a conductive material such that the at least one heating element mounted therein can indirectly heat the heat storage medium 21 in the core chamber 23. In addition, by forming the element conduits 45 from a highly conductive material, the heat can be effectively and quickly drawn away, thereby prolonging the service life of the heating elements. Preferably the element conduits 45 therefore comprise a metal, for example steel or stainless steel, an Incoloy (RTM) alloy or an Inconel (RTM) alloy, or a ceramic, such as silicon carbide.

The fluid system 14 comprises a transfer fluid and defines a fluid circulation circuit 50 (illustrated only in Figure 2) of the transfer fluid extending through the core 11, base 12 and, if present, insulation block 41. The fluid system 14 is preferably a closed loop, constant volume system. The transfer fluid is preferably air. The fluid system 14 comprises a heat exchanger 51 and a fan 52, which may be mounted inside the base 12, particularly the base housing 30 thereof. The heat exchanger 51 may be located downstream of the core 11 and upstream of the fan 52. The heat exchanger 51 is configured to extract heat from the heated transfer fluid and transfer the heat to the heat demand system 15. The heat demand system 15 may comprise, for example, at least one pipe circulating a fluid, such as water, through the heat exchanger 51 as illustrated. The heat exchanger 51 may be of any suitable type, such as fin and tube, or material, such as brazed copper. The heat exchanger 51 may comprise an exchanger inlet 53 for receiving heated transfer fluid from the core 11 and an exchanger outlet 54 for directing cooled transfer fluid to the fan 52.

The fan 52 is for directing the transfer fluid around the fluid system 14 and along the fluid circulation circuit 50. The fan 52 may be operated, such as by controlling its speed, to control the flowrate around the fluid system 14 and along the fluid circulation circuit 50. The fan 52 may be located upstream of the core 11 and downstream of the heat exchanger 51. The fan 52 may comprise a fan inlet 55 for receiving cooler transfer fluid from the heat exchanger 51 and the fan inlet 55 may be mounted substantially directly at the exchanger outlet 54 as illustrated. The fan 52 may comprise a fan outlet 56 out of which it drives transfer fluid and the fan 52 may be driven by fan motor 57, such as an electronically commutated (EC) motor. The fan motor 57 may be variable to drive the fan 52 to provide a variable flowrate and thus control the power output from the core 11.

The fluid system 14 further comprises a cooled fluid passageway 60 extending from the heat exchanger 51 to the core 11, core fluid passageways 62 extending through the core 11 and a heated fluid passageway 61 extending from the core 11 to the heat exchanger 51. The cooled fluid passageway 60 may diverge into and be connected to the core fluid passageways 62 and the heated fluid passageway 61 may be connected to and converge from the core fluid passageways 62. The cooled and heated fluid passageways 60, 61 may be located in the base 12 and, if present, insulation arrangement 40. They may be separated and sealed from one another within the base chamber 31 by at least one base wall 35, by the heat exchanger 51 and/or by the fan 52. The cooled fluid passageway 60 may comprise a main cooled fluid passageway 63 extending from the exchanger outlet 54 through the base chamber 31 and leading to cooled fluid sub-passageways 34, 42, which may comprise the base passageway(s) 34 and/or insulation passageway(s) 42. The fan 52 is located in the cooled fluid passageway 60. The heated fluid passageway 61 may comprise heated fluid sub-passageways 34, 42, which may comprise the base passageway(s) 34 and/or and insulation passageway(s) 42, leading to a main heated fluid passageway 78 extending through the base chamber 31 to the exchanger inlet 53.

The fluid system 14 may comprise an inlet distributor 64 located in the cooled fluid passageway 60, preferably the main cooled fluid passageway 63, for distributing transfer fluid, preferably substantially evenly, between the core fluid passageways 62 (and thus, if present, between the cooled fluid sub-passageways 34, 42). The inlet distributor 64 may comprise a distributor plate 65 extending across the main cooled fluid passageway 63 and across and covering at least one cooled fluid sub-passageway 34, 42. The distributor plate 65 comprises at least one distributor aperture 66 therethrough and the distributor plate 65 may be sealed at its edges to the base housing 30 such that transfer fluid can only reach the at least one cooled fluid sub-passageway 34, 42 behind the distributor plate 65 through the at least one distributor aperture 66. The at least one distributor aperture 66 is sized and shaped such that the flowrate of transfer fluid there through ensures that the flowrate of transfer fluid into each cooled fluid sub-passageway 34, 42, including those not covered by the distributor plate 65, is substantially similar.

The fluid system 14 comprises fluid conduits 70, 71, each comprising at least one core fluid passageway 62 and thus a hollow pipe. The fluid conduits 70, 71 extend, preferably entirely and continuously, through the core chamber 23 for enabling the transfer of heat from the heat storage medium 21, through the fluid conduits 70, 71 and to the transfer fluid in the core fluid passageways 62 by forced convection. The core fluid passageways 62, and the transfer fluid therein, are sealed from the core chamber 23 by, for example, the fluid conduits 70, 71 being sealed and mounted to the core housing 20. The fluid conduits 70, 71 may therefore comprise fluid conduit inlets and outlets 72, 73, 74, 75 located where the fluid conduits 70, 71 meet or extend through the core housing 20. As a result, the transfer fluid passes through the core 11 without contacting the heat storage medium 21.

In order to further minimise the pressure drop, each of the fluid conduits 70, 71 and core fluid passageways 62 comprise, between fluid conduit inlets and outlets 72, 73, 74, 75, at least one curved turn and preferably only at least one turn that is curved. The magnitude of the centreline radius (i.e. the distance from the centre of curvature to the centreline of the fluid conduits 70, 71 and/or core fluid passageways 62) of the at least one curved turn may be at least one, preferably at least 1.5, fluid conduit 70, 71 and/or core fluid passageways 62 diameter. The core fluid passageways 62 may therefore not comprise distinct edges at which pressure drops might occur.

As illustrated the fluid conduits 70, 71 may extend between, and thus the fluid conduit inlets and outlets 72, 73, 74, 75 may be at, the same side or face of the core 11, core housing 20 and/or core chamber 23. Thus the at least one core fluid passageway 62 may turn through 180° along its length. Such an arrangement provides a compact storage boiler 10 and only a single face requires sealing with the fluid conduits 70, 71. However, they may extend between different sides or faces depending upon the arrangement of the fluid system 14. The fluid conduits 70, 71 may be arranged in sets of substantially similar and parallel fluid conduits 70, 71, such as a set of inner fluid conduits 70 substantially surrounded by a set of outer fluid conduits 71. For example, the inner fluid conduits 70 may comprise a 180° curved turn, or U-bend, between straight sections extending to inner fluid conduit inlets and outlets 72, 73. The outer fluid conduits 71 may comprise two right angled turns with a straight section therebetween and straight sections between the right angled turns and the outer fluid conduit inlets and outlets 74, 75. The fluid conduits 70, 71 may extend at least partially around at least one element conduit 45. The inner fluid conduits 70 may extend around a row of element conduits 45. At least one row of element conduits 45 may extend between the inner fluid conduits 70 and the outer fluid conduits 71. The planes along which the fluid conduits 70, 71 extend may be orthogonal to the planes along which the element conduits 45 extend. Such an arrangement ensures a compact storage boiler 10 as well as providing an efficient arrangement for the provision of heat to and extraction of heat from the heat storage medium 21.

The fluid conduits 70, 71 comprise a conductive material such that heat from the heat storage medium 21 can be effectively transferred to the transfer fluid. Preferably the fluid conduits 70, 71 therefore comprise a metal, for example steel, stainless steel, an Incoloy (RTM) alloy or an Inconel (RTM) alloy, or a ceramic, such as silicon carbide. The diameter of the fluid conduits 70, 71 and/or core fluid passageways 62 may be substantially constant along their length or may gradually increase along their length and through the core chamber 23. The latter arrangement accounts for pressure drops resulting from friction between the transfer fluid and the walls of the core fluid passageways 62. Although not illustrated, the fluid conduits 70, 71 may comprise at least one fin on their exterior walls for improving heat transfer with the heat storage medium 21.

The interior walls of the core fluid passageways 62 may be substantially smooth as illustrated. However, if the flow is laminar at the interior walls there may be a boundary layer of relatively high temperature adjacent thereto. As a result, in alternative embodiments, the fluid conduits 70, 71 may comprise a turbulence inducing arrangement in the core fluid passageways 62 and at the interior walls thereof for inducing turbulence at the interior walls. The turbulence reduces or remove the boundary layer, thereby improving heat transfer to the transfer fluid. The turbulence inducing arrangement may comprise at least one turbulator, such as helical grooves (i.e. rifling), fins, coils, helical strips, twisted tapes and the like.

In order to further reduce the possibility of a pressure drop, the exchanger inlet 53 may face or be directly downstream from, and may be arranged to extend across, a plurality of fluid conduit outlets 73, 75 to effectively collect heated transfer fluid directly therefrom. The fluid conduit outlets 73, 75 may be arranged to direct transfer fluid directly towards the exchanger inlet 53 through the heated fluid passageway 61, optionally though at least one distribution baffle 90, 91, 92 (discussed below). The heat storage medium 21 is preferably distributed at least partially, preferably entirely, around and in contact with the exterior of at least one, preferably every, fluid conduit(s) 70, 71 and/or heating element conduit(s) 45. The core chamber 23 may be defined as the volume between the interior of the core housing 20 and the exterior of the at least one element conduit 45 and/or fluid conduit 70, 71.

The fluid system 14 further comprises a bypass arrangement 80 for selectively communicating transfer fluid directly from the cooled fluid passageway 60 to the heated fluid passageway 61 without passing through the core 11 (i.e. such that at least part of the transfer fluid exiting the fan 52 bypasses the core 11). The bypass arrangement 80 thus mixes cooled transfer fluid with heated transfer fluid prior to the mixed transfer fluid entering the heat exchanger 51. Mixing the cooled and heated transfer fluid allows the mixed transfer fluid to distribute itself along the heat exchanger 51 to prevent local hotspots. The bypass arrangement 80 may comprise a bypass inlet 81 located downstream of the heat exchanger 51 and upstream of the core 11 and may comprise a bypass outlet 82 located downstream of the core 11 and upstream of the heat exchanger 51. The bypass inlet 81 may be located immediately downstream of the fan 52, such that the bypass inlet 81 is between the fan 52 and the core 11, particularly the fluid conduit inlets 72, 73. The bypass arrangement 80 also comprises a bypass gate 83 for controlling the flow of transfer fluid between the bypass inlet and outlet 81, 82.

The bypass gate 83 may be a pivotable lever as illustrated, valve or other such flow controller and may be located in the cooled fluid passageway 60 downstream of the heat exchanger 51 and fan 52. The bypass gate 83 is moveable or pivotable (illustrated by arrow 84 in Figure 2) from a closed configuration (not illustrated), in which substantially no transfer fluid can flow through the bypass arrangement 80, to an open configuration (illustrated in Figures 2, 3 and 5), in which at least a portion of transfer fluid in the cooled fluid passageway 60 and exiting the fan 52 can flow through the bypass arrangement 80. The position of the bypass gate 83 may be controlled by a bypass actuator 85, which is preferably a stepper motor, servo or solenoid. The bypass arrangement 80 may comprise a bypass passageway 86, in which the bypass gate 83 is located or to which the bypass gate 83 leads as illustrated, which communicates transfer fluid to the heated fluid passageway 61. As illustrated the bypass passageway 86 may be defined between the at least one base wall 35, heat exchanger 51, and base housing 30.

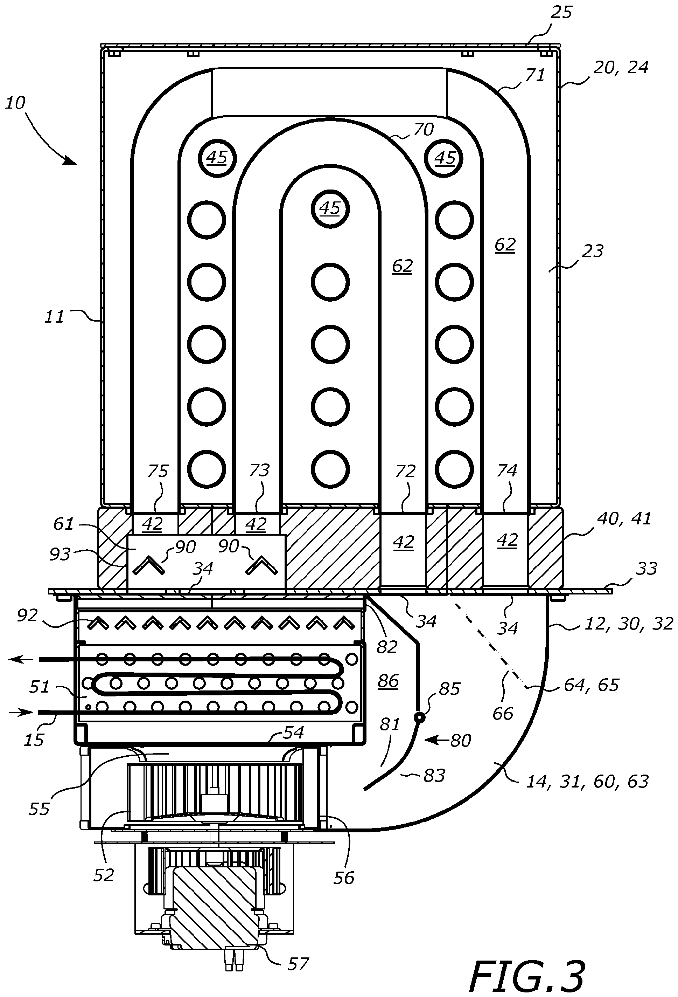

The embodiment of Figures 3 to 6 illustrate a variant of the heated fluid passageway 61 in accordance with the present disclosure. In particular, the fluid system 14 may comprise at least one distribution baffle 90, 91, 92 located in the heated fluid passageway 61 and arranged to distribute and mix transfer fluid from the fluid conduits 70, 71 prior to entry into the exchanger inlet 53. Preferably the at least one distribution baffle 90, 91, 92 distributes transfer fluid substantially evenly across the exchanger inlet 53. Although such an arrangement can result in turbulence, and thus pressure drop, it can be used to ensure that the temperature and velocity of transfer fluid across the exchanger inlet 53 is substantially constant. This avoids "hot spots" that might damage the heat exchanger 51 and improves efficiency by distributing transfer fluid across the entire surface area of the heat exchanger 51.

The at least one distribution baffle 90, 91, 92 may extend across the heated fluid passageway 61 and may be distributed in an array or arrays separated along the heated fluid passageway 61. The or each distribution baffle 90, 91, 92 may comprise an elongate rail, which may flare or taper outwardly along the fluid flow direction, such as by having an inverted V-shape. The or each distribution baffle 90, 91, 92 may alternatively comprise a tube and tube apertures may extend through the tube and distributed along the length of the tube. At least one first distribution baffle 90, preferably parallel first distribution baffles 91 in a first array as illustrated, may be located in and extend across a recess 93 in the insulation arrangement 40 for distributing transfer fluid exiting the fluid conduits 70, 71. At least one third distribution baffle 92, preferably parallel third distribution baffles 92 in a third array as illustrated, may be located in the base chamber 31 extending over the exchanger inlet 53 for distributing transfer fluid just prior to entering the exchanger inlet 53. At least one second distribution baffle 91, preferably parallel second distribution baffles 91 in a second array as illustrated, may be located in the base chamber 31 downstream of the at least one first distribution baffle 90 and/or upstream of the at least one third distribution baffle 92. The at least one second distribution baffles 91 may extend orthogonally to the first and/or third distribution baffles 90, 92.

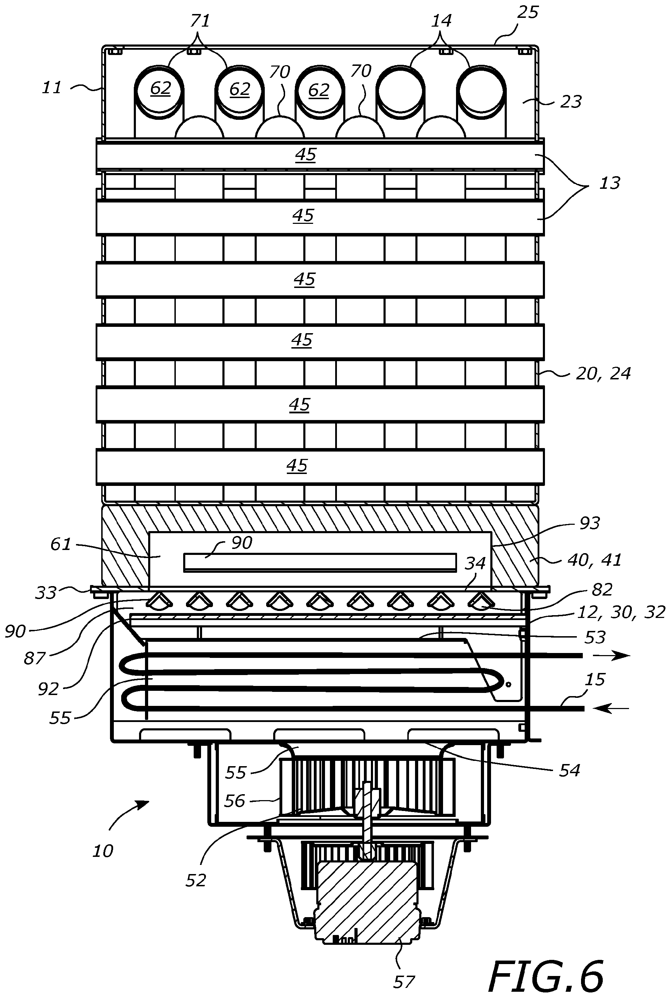

Figures 5 and 6 illustrate a particularly preferred arrangement in which the bypass outlet 82 comprises apertures through a bypass outlet wall 87 and each aperture leads to a second distribution baffle 91. The second distribution baffles 91 comprise at least one baffle recess facing downstream, such as by being formed on the inside of the inverted V-shape of the rails. The bypass outlet 82 therefore directs cooled transfer fluid into the baffle recess and the baffle recess distributes cooled transfer fluid towards the opposing face of the heated fluid passageway 61 to the bypass outlet 82. Alternatively, the second distribution baffles 91 may comprise a tube with tube apertures directing the cooled transfer fluid downstream. As a result, transfer fluid is more evenly distributed across the entire width of the heated fluid passageway 61. When combined with the first and/or third distribution baffles 90, 92, the second distribution baffle 91 assists in evenly and effectively mixing the heated transfer fluid from the core 11 and cooled transfer fluid from the bypass arrangement 80 such that the exchanger inlet 53 receives a transfer fluid at a substantially even temperature across its surface area. The second distribution baffles 91 may be configured to release a substantially similar flowrate of transfer fluid along their length. For example, the inverted V-shaped rails of the second distribution baffles 91 may reduce in width (i.e. the maximum distance between the free edges of the "V" when viewed in cross-section) along their length away from the bypass outlet 82. Alternatively, the rails may comprise notches at the free edges that increase in size from the bypass outlet 82. Alternatively, the tube apertures may increase in diameter the further they are from the bypass outlet 82.

The storage boiler 10 comprises a control system (not illustrated). The control system may comprise a controller in communication with at least one sensor and at least one actuator, including the fan motor 57 and bypass actuator 85. The controller may comprise at least one processor, at least one memory and at least one network adapter for allowing communication between the at least one processor and an external network, such as the Internet. The at least one sensor may comprise at least one temperature sensor. In particular, the control system may comprise at least one core temperature sensor located in or at the core 11 for determining the temperature of the core 11 and heat storage medium 21. The control system may comprise at least one exchanger temperature sensor located in the heated fluid passageway 61, preferably adjacent to or at the exchanger inlet 53, for determining the temperature of transfer fluid entering the heat exchanger 51. The control system may comprise at least one fan temperature sensor located in the cooled fluid passageway 60, preferably adjacent to or at the fan outlet 56, for determining the temperature of cooled transfer fluid exiting the fan 52. The control system may therefore control the fluid system 14 and electrical system 13 based upon the output from the at least one temperature sensor. The control system may also monitor the electrical power consumption of the electrical system 13 and/or the frequency of the electricity grid to which it is connected and use the resulting data to control the time of heating of the core 11.

During operation of the storage boiler 10, the control system controls the electrical system 13 to draw electrical power from the electricity network. The heating elements convert the electrical energy to heat, which is conducted through the element conduits 45 to the heat storage medium 21 in the core 11. The heat storage medium 21 stores the heat therein for later extraction by the fluid system 14. By controlling the electrical power received by the heating elements, the control system controls the heating of the heat storage medium 21 to a maximum core temperature 101. Thus if the control system determines that the temperature of the heat storage medium 21 is below the maximum core temperature 101, or below a desired core temperature, the control system operates the electrical system 13 to heat the core 11. If the temperature of the heat storage medium 21 reaches, exceeds or is expected to reach the maximum core temperature 101 or desired core temperature, the control system operates the electrical system 13 to stop or reduce heating of the core 11 by drawing less electrical power.

In order to extract heat from the storage boiler 10, the control system operates the fan 52 to circulate transfer fluid around the fluid circulation circuit 50. The fan 52 directs transfer fluid from the heat exchanger 51 (in which it has been cooled) through the cooled fluid passageway 60 and into the core fluid passageways 62. The control system may control the fan 52 to control the overall flowrate of transfer fluid around the fluid system 14, particularly the flowrate through the heat exchanger 51. The control system may control the bypass arrangement 80, particularly the bypass gate 83, to control the proportion of the overall flowrate that goes through each of the bypass arrangement 80 and the core 11. Thus, at a fixed speed of the fan 52 and thus a fixed overall flowrate through the fluid system 14 and heat exchanger 51, the flowrate through the core 11 can be increased or decreased by adjusting the bypass arrangement 80 and particularly the position of the bypass gate 83.

In particular, the transfer fluid may pass through the main cooled fluid passageway 63 into the cooled fluid sub-passageways 34, 42, with some of it passing through the distributor plate 65 if present. The transfer fluid is driven through the core fluid passageways 62 in which it receives heat conducted through the fluid conduits 70, 71 from the heat storage medium 21. The heated transfer fluid is then driven from the core fluid passageways 62 through the heated fluid passageway 61 into the heat exchanger 51. In particular, the heat transfer fluid is directed through the heated fluid sub-passageways 34, 42, converges into the main heated fluid passageway 78 and passes into the exchanger inlet 53. If present, the heated transfer fluid is mixed by the at least one distribution baffle 90, 91, 92, optionally with cooled transfer fluid from the bypass arrangement 80 provided that the bypass gate 83 is open.

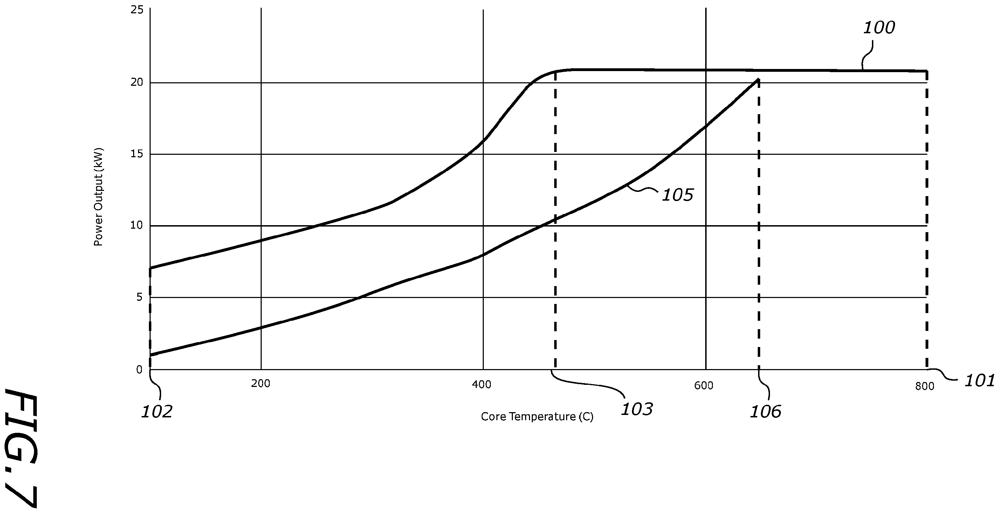

Figure 7 illustrates the power output of the storage boiler 10 (i.e. the heat extracted by the heat demand system 15, on the Y-axis) against the core temperature, which is the temperature of the heat storage medium 21 (on the X-axis). The maximum power output of the storage boiler 10 at a given core temperature is illustrated by maximum power curve 100, which extends between the maximum core temperature 101 and minimum core temperature 102 with an intermediate core temperature 103 therebetween.

The control system controls the power output of the storage boiler 10 by varying the speed of the fan 52 to control the transfer fluid flowrate through the core 11 and by controlling the flowrate of cooled transfer fluid through the bypass arrangement 80. The control system controls the power output of the storage boiler 10 at a given core temperature, determined by the at least one core temperature sensor, by controlling the speed of the fan 52, thereby controlling the transfer fluid flowrate through the core 11. In particular, the control system may determine or receive a desired heat power output and/or desired water temperature at the heat demand system 15, for example based upon at least one temperature sensor located in the heat demand system 15 such as at a hot water outlet, and/or a desired transfer fluid flowrate through the core 11 and operate the fan 52 to at least one of a plurality of fan speeds (e.g. selecting one speed from a continuous range of speeds) based upon the desired heat power output, desired water temperature and/or desired transfer fluid flowrate. Hence, when the core 11 is at a certain temperature, if less than the maximum power output is required, the speed of the fan 52 is reduced from its maximum.

Prior art power curve 105 illustrates the maximum power output for a prior art storage boiler, such as that disclosed in EP0029010B1 and EP0038305B1. As illustrated, the prior art maximum core temperature 106 is less than the maximum core temperature 101 of the storage boiler 10 of the present disclosure. This is because prior art maximum core temperature 106 is set in accordance with the maximum temperature rating of the heat exchanger. However, by incorporating the bypass arrangement 80 of the present disclosure the maximum core temperature 101 can be much higher, whilst the temperature of the transfer fluid passing through the exchanger inlet 53 controlled in accordance with the maximum temperature rating of the heat exchanger 51.

Therefore, when the control system determines from the core temperature, which may be determined based upon the output of the at least one core temperature sensor, a determination of the fan speed and/or the at least one exchanger temperature sensor, is between the intermediate core temperature 103 and maximum core temperature 101, the control system operates the bypass gate 83 in its open configuration. The control system operates the bypass gate 83 to control the flowrate of transfer fluid through the bypass arrangement 80 to maintain the temperature of the transfer fluid at the exchanger inlet 53, which may be determined from the output of the at least one exchanger temperature sensor, at a heat exchanger temperature value. The heat exchanger temperature value is substantially constant, and thus maximum power output of the storage boiler 10, when the core temperature is between the intermediate core temperature 103 and maximum core temperature 101. As the core temperature decreases from the maximum core temperature 101 towards the intermediate core temperature 103 the bypass gate 83 is closed by the control system further to reduce the flowrate of transfer fluid through the bypass arrangement 80. Thus the bypass arrangement 80 allows the storage boiler 10 to provide maximum power output over a wide range of core temperatures, as opposed to providing maximum power output at only the maximum core temperature as in prior art storage boilers. Furthermore, the heat exchanger 51 can be designed to have a lower temperature and/or power rating to that of the prior art and can thus comprise lower cost materials.

The intermediate core temperature 103 is the core temperature that results in the temperature of the transfer fluid at the fluid conduit outlets 73, 75 being substantially at the heat exchanger temperature value and/or the temperature of the transfer fluid at the exchanger inlet 53 being at the heat exchanger temperature value when the bypass gate 83 is closed. Effectively, the core temperature has reached a sufficiently low temperature that there is no need to mix the heated transfer fluid with cooled transfer fluid to ensure the transfer fluid is at or below the heat exchanger temperature value at the exchanger inlet 53. When the control system determines that the core temperature, which may be determined from the output of the at least one core temperature sensor, is less than the intermediate core temperature 103 and above the minimum core temperature 102 the bypass gate 83 is closed. At this point the maximum power output is dependent upon the core temperature. When the core temperature is below the minimum core temperature 102 the storage boiler 10 cannot effectively provide the required heat to the heat demand system 15 and thus the control system may operate the fan 52 to stop circulating transfer fluid around the fluid system 14.

The maximum core temperature 101 may be up to approximately 950°C or approximately 1150°C and may be at least approximately 700°C or at least approximately 800°C. The intermediate core temperature 103 may be up to approximately 450°C or approximately 550°C and may be at least approximately 200°C or at least approximately 400°C. The minimum core temperature 102 may be up to approximately 150°C, approximately 200°C or approximately 200°C and may be at least approximately 50°C or at least approximately 100°C. The heat exchanger temperature value may be up to approximately 450°C or approximately 350°C and may be at least approximately 250°C or at least approximately 300°C. The illustrated maximum power curve 100 is for a storage boiler 10 according to the present disclosure with a minimum core temperature 102 of approximately 120°C, an intermediate core temperature 103 of approximately 450°C, a maximum core temperature 101 of approximately 800°C and maximum power output of around 21 kWt.

In further embodiments in accordance with the present invention the storage boiler 10 may comprise a plurality of heat exchangers 51 and/or fans 52 located in the fluid circulation circuit 50. Rather than a plurality of fluid conduits 70, 71, the storage boiler 10 may comprise a single fluid conduit 70, 71 such that the cooled and heated fluid passageways 60, 61 do not comprise cooled and heated fluid sub-passageways 34, 42. The core 11 may be considered to comprise the element conduits 45 and/or fluid conduit(s) 70, 71 rather than the electrical system 13 and fluid system 14. The core housing 20, element conduits 45 and/or fluid conduit(s) 70, 71 may comprise a corrosion resistant material such as steel, stainless steel, a superalloy, an Incoloy (RTM) alloy or an Inconel (RTM) alloy, or a ceramic, such as silicon carbide.

## Claims

1. A storage boiler (10) comprising:
a core (11) comprising a heat storage medium (21);
a base (12) to which the core (11) is mounted, and
a fluid system (14) extending through the core (11) and comprising:
a heat exchanger (51);
a cooled fluid passageway (60) extending from the heat exchanger (51) to the core (11);
a heated fluid passageway (61) extending from the core (11) to the heat exchanger (51);
a fan (52) for circulating a transfer fluid through the cooled fluid passageway (60), the core (11), the heated fluid passageway (61) and the heat exchanger (51); and
a bypass arrangement (80) for selectively communicating at least part of the transfer fluid from the cooled fluid passageway (60) to the heated fluid passageway (61) without passing through the core (11) and mixing cooled transfer fluid with heated transfer fluid prior to the mixed transfer fluid entering the heat exchanger (51), wherein the bypass arrangement (80) is mounted inside the base (12); and a control system configured to operate the fan (52), by varying the speed of the fan (52), for controlling the flowrate of transfer fluid through the core (11) and fluid system (14) and to operate the bypass arrangement (80) for controlling the flowrate of transfer fluid through the bypass arrangement (80).

2. A storage boiler (10) as claimed in claim 1 wherein the bypass arrangement (80) comprises a bypass inlet (81) located downstream of the heat exchanger (51) and upstream of the core (11) and/or a bypass outlet (82) located downstream of the core (11) and upstream of the heat exchanger (51).

3. A storage boiler (10) as claimed in any one of the preceding claims wherein the bypass arrangement (80) comprises a bypass gate (83) for controlling the flow of transfer fluid through the bypass arrangement (80), further wherein:
the bypass gate (83) is located in the cooled fluid passageway (60) downstream of the heat exchanger (51) and fan (52);
the bypass gate (83) is moveable from a closed configuration, in which substantially no transfer fluid can flow through the bypass arrangement (80), to an open configuration, in which at least a portion of transfer fluid in the cooled fluid passageway (60) can flow through the bypass arrangement (80); and/or
the bypass arrangement (80) comprises a bypass passageway (86), in which the bypass gate (83) is located or to which the bypass gate (83) leads, for communicating transfer fluid to the heated fluid passageway (61).

4. A storage boiler (10) as claimed in any one of the preceding claims wherein the fluid system (14) further comprises at least one core fluid passageway (62) extending through the core (11) between the cooled and heated fluid passageways (60, 61).

5. A storage boiler (10) as claimed in any one of the preceding claims wherein the fluid system (14) comprises at least one distribution baffle (90, 91, 92) located in the heated fluid passageway (61) for distributing transfer fluid exiting the core (11) prior to entry into the heat exchanger (51).

6. A storage boiler (11) as claimed in claim 5 wherein the at least one distribution baffle (90, 91, 92) comprises at least one baffle recess, wherein the bypass arrangement (80) comprises a bypass outlet (82) located at the heated fluid passageway (61) and configured to direct transfer fluid from the bypass arrangement (80) into the baffle recess, wherein at least one baffle recess is configured to distribute transfer fluid towards the opposing face of the heated fluid passageway (61) to the bypass outlet (82).

7. A storage boiler (10) as claimed in claim 6 wherein the bypass outlet (82) comprises apertures through a bypass outlet wall (87) and each aperture leads to at least one baffle recess, further wherein the or each distribution baffle comprises an elongate rail, which flares or tapers outwardly to form the at least one baffle recess and/or the each distribution baffle comprises a tube with tube apertures therethrough.

8. A method of operating a storage boiler (10), the storage boiler (10) comprising:
a core (11) comprising a heat storage medium (21);
a base (12) to which the core (11) is mounted;
a fluid system (14) extending through the core (11) and comprising a heat exchanger (51), a cooled fluid passageway (60), a heated fluid passageway (61), a fan (52) and a bypass arrangement (80), wherein the bypass arrangement (80) is mounted inside the base (12); and
a control system configured to operate the fan (52), by varying the speed of the fan (52), for controlling the flowrate of transfer fluid through the core (11) and fluid system (14) and to operate the bypass arrangement (80) for controlling the flowrate of transfer fluid through the bypass arrangement (80),
wherein the method comprises:
operating the fan (52) to direct transfer fluid from the heat exchanger (51) to the core (11) through the cooled fluid passageway (60), through the core (11) and from the core (11) to the heat exchanger (51) through the heated fluid passageway (61); and
operating the bypass arrangement (80) to communicate at least part of the transfer fluid from the cooled fluid passageway (60) through the bypass arrangement (80) to the heated fluid passageway (61) without passing through the core (11) and mix cooled transfer fluid with heated transfer fluid prior to the mixed transfer fluid entering the heat exchanger (51).

9. A method as claimed in claim 8 further comprising:
determining a desired heat power output and/or desired water temperature at an external heat demand system (15) configured to receive heat from the heat exchanger (51) and/or a desired transfer fluid flowrate through the core (11); and
operating the fan (51) to at least one of a plurality of fan speeds based upon the desired heat power output, desired water temperature and/or the desired transfer fluid flowrate.

10. A method as claimed in claim 8 or claim 9 further comprising operating the bypass arrangement (80) to control a flowrate of transfer fluid through the bypass arrangement (80) to maintain a temperature of the transfer fluid entering the heat exchanger (51) at or below a heat exchanger temperature value.

11. A method as claimed in any one of claims 8 to 10 wherein the bypass arrangement (80) comprises a bypass gate (83) and the method further comprises operating the bypass gate (83) in an open configuration, in which at least a part of the transfer fluid in the cooled fluid passageway (60) is communicated through the bypass arrangement (80), to control the flowrate of transfer fluid through the bypass arrangement (80).

12. A method as claimed in claim 11 where the bypass gate (83) is operated in the open configuration when a core temperature is between an intermediate core temperature (103) and a maximum core temperature (101).

13. A method as claimed in claim 11 or claim 12 wherein the bypass gate (83) is increasingly closed and/or operated to reduce the flowrate of transfer fluid through the bypass arrangement (80) as the core temperature decreases towards the intermediate core temperature (103).

14. A method as claimed in any one of claims 8 to 13 wherein the fluid system (14) comprises at least one distribution baffle (90, 91, 92) located in the heated fluid passageway (61) and the method comprises directing the transfer fluid out of the core (11) and onto at least one distribution baffle (90, 91, 92) to distribute transfer fluid exiting the core (11) prior to entry into the heat exchanger (51).

15. A method as claimed in claim 14 wherein the at least one distribution baffle (90, 91, 92) comprises at least one baffle recess, wherein the bypass arrangement (80) comprises a bypass outlet (82) located at the heated fluid passageway (61), wherein the method comprises directing transfer fluid from the bypass arrangement (80) out of the bypass outlet (82) and into the baffle recess such that the baffle recess distributes transfer fluid towards the opposing face of the heated fluid passageway (61) to the bypass outlet (82).

## Patentansprüche

1. Speicherkessel (10), umfassend:
einen Kern (11), der ein Wärmespeichermedium (21) umfasst;
eine Basis (12), an welcher der Kern (11) montiert ist, und
ein Fluidsystem (14), das sich durch den Kern (11) erstreckt und umfasst:
einen Wärmetauscher (51);
einen Durchgang für gekühltes Fluid (60), der sich von dem Wärmetauscher (51) zum Kern (11) erstreckt;
einen Durchgang für erwärmtes Fluid (61), der sich von dem Kern (11) zum Wärmetauscher (51) erstreckt;
ein Gebläse (52), zum Zirkulieren eines Transferfluids durch den Durchgang für gekühltes Fluid (60), den Kern (11), den Durchgang für erwärmtes Fluid (61) und den Wärmetauscher (51); und
eine Umgehungsanordnung (80) für selektives Übertragen mindestens eines Teils des Transferfluids von dem Durchgang für gekühltes Fluid (60) zum Durchgang für erwärmtes Fluid (61), ohne den Kern (11) zu passieren, und Mischen eines gekühlten Transferfluids mit einem erwärmten Transferfluid, bevor das gemischte Transferfluid in den Wärmetauscher (51) gelangt, wobei die Umgehungsanordnung (80) innerhalb der Basis (12) montiert ist; und
ein Steuersystem, das ausgestaltet ist, das Gebläse (52) durch Variieren der Geschwindigkeit des Gebläses (52) zu betreiben, um die Durchflussrate von Transferfluid durch den Kern (11) und das Fluidsystem (14) zu steuern, und die Umgehungsanordnung (80) so zu betreiben, dass die Durchflussrate von Transferfluid durch die Umgehungsanordnung (80) gesteuert wird.

2. Speicherkessel (10) nach Anspruch 1, wobei die Umgehungsanordnung (80) einen Umgehungseinlass (81), der sich stromabwärts des Wärmetauschers (51) und stromaufwärts des Kerns (11) befindet, und/oder einen Umgehungsauslass (82), der sich stromabwärts des Kerns (11) und stromaufwärts des Wärmetauschers (51) befindet, umfasst.

3. Speicherkessel (10) nach einem der vorhergehenden Ansprüche, wobei die Umgehungsanordnung (80) ein Umgehungstor (83) zum Steuern des Flusses von Transferfluid durch die Umgehungsanordnung (80) umfasst, ferner wobei:
sich das Umgehungstor (83) in dem Durchgang für gekühltes Fluid (60) stromabwärts des Wärmetauschers (51) und des Gebläses (52) befindet;
das Umgehungstor (83) von einer geschlossenen Konfiguration, in der im Wesentlichen kein Transferfluid durch die Umgehungsanordnung (80) fließen kann, in eine offene Konfiguration, in der mindestens ein Teil des Transferfluids in dem Durchgang für gekühltes Fluid (60) durch die Umgehungsanordnung (80) fließen kann, bewegbar ist; und/oder
die Umgehungsanordnung (80) einen Umgehungsdurchgang (86) umfasst, in dem sich das Umgehungstor (83) befindet oder zu dem das Umgehungstor (83) führt, um Transferfluid zu dem Durchgang für erwärmtes Fluid (61) zu übertragen.

4. Speicherkessel (10) nach einem der vorhergehenden Ansprüche, wobei das Fluidsystem (14) ferner mindestens einen Kernfluiddurchgang (62) umfasst, der sich durch den Kern (11) zwischen dem Durchgang für gekühltes und erwärmtes Fluid (60, 61) erstreckt.

5. Speicherkessel (10) nach einem der vorhergehenden Ansprüche, wobei das Fluidsystem (14) mindestens eine Verteilungsprallfläche (90, 91, 92) umfasst, die sich in dem Durchgang für erwärmtes Fluid (61) befindet, um Transferfluid, das aus dem Kern (11) austritt, vor Eintritt in den Wärmetauscher (51) zu verteilen.

6. Speicherkessel (11) nach Anspruch 5, wobei die mindestens eine Verteilungsprallfläche (90, 91, 92) mindestens eine Prallflächenausnehmung umfasst, wobei die Umgehungsanordnung (80) einen Umgehungsauslass (82) umfasst, der sich an dem Durchgang für erwärmtes Fluid (61) befindet und ausgestaltet ist, Transferfluid von der Umgehungsanordnung (80) in die Prallflächenausnehmung zu leiten, wobei mindestens eine Prallflächenausnehmung ausgestaltet ist, Transferfluid in Richtung der gegenüberliegenden Fläche des Durchgangs für erwärmtes Fluid (61) zu dem Umgehungsauslass (82) zu verteilen.

7. Speicherkessel (10) nach Anspruch 6, wobei der Umgehungsauslass (82) Öffnungen durch eine Umgehungsauslasswand (87) umfasst und jede Öffnung zu mindestens einer Prallflächenausnehmung führt, ferner wobei die oder jede Verteilungsprallfläche eine längliche Schiene umfasst, die sich nach außen aufweitet oder verjüngt, um die mindestens eine Prallflächenausnehmung zu bilden, und/oder die oder jede Verteilungsprallfläche ein Rohr mit Rohröffnungen hindurch umfasst.

8. Verfahren zum Betreiben eines Speicherkessels (10), der Speicherkessel (10) umfassend:
einen Kern (11), der ein Wärmespeichermedium (21) umfasst;
eine Basis (12), an welcher der Kern (11) montiert ist;
ein Fluidsystem (14), das sich durch den Kern (11) erstreckt und einen Wärmetauscher (51), einen Durchgang für gekühltes Fluid (60), einen Durchgang für erwärmtes Fluid (61), ein Gebläse (52) und eine Umgehungsanordnung (80) umfasst, wobei die Umgehungsanordnung (80) innerhalb der Basis (12) montiert ist; und
ein Steuersystem, das ausgestaltet ist, das Gebläse (52) durch Variieren der Geschwindigkeit des Gebläses (52) zu betreiben, um die Durchflussrate von Transferfluid durch den Kern (11) und das Fluidsystem (14) zu steuern, und die Umgehungsanordnung (80) so zu betreiben, dass die Durchflussrate von Transferfluid durch die Umgehungsanordnung (80) gesteuert wird,
wobei das Verfahren umfasst:
Betreiben des Gebläses (52), um Transferfluid von dem Wärmetauscher (51) zu dem Kern (11) durch den Durchgang für gekühltes Fluid (60), durch den Kern (11) und von dem Kern (11) zum Wärmetauscher (51) durch den Durchgang für erwärmtes Fluid (61) zu leiten; und
Betreiben der Umgehungsanordnung (80), um mindestens einen Teil des Transferfluids von dem Durchgang für gekühltes Fluid (60) durch die Umgehungsanordnung (80) zu dem Durchgang für erwärmtes Fluid (61) zu übertragen, ohne den Kern (11) zu passieren, und gekühltes Transferfluid mit erwärmtem Transferfluid zu mischen, bevor das gemischte Transferfluid in den Wärmetauscher (51) gelangt.

9. Verfahren nach Anspruch 8, ferner umfassend:
Bestimmen einer erwünschten Wärmeleistungsabgabe und/oder einer erwünschten Wassertemperatur an einem externen Wärmebedarfssystem (15), das ausgestaltet ist, Wärme von dem Wärmetauscher (51) zu empfangen, und/oder einer erwünschten Transferfluid-Durchflussrate durch den Kern (11); und
Betreiben des Gebläses (51) mit mindestens einer einer Mehrzahl von Gebläsegeschwindigkeiten basierend auf der erwünschten Wärmeleistungsabgabe, der erwünschten Wassertemperatur und/oder der erwünschten Transferfluid-Durchflussrate.

10. Verfahren nach Anspruch 8 oder 9, ferner umfassend ein Betreiben der Umgehungsanordnung (80) zum Steuern einer Durchflussrate von Transferfluid durch die Umgehungsanordnung (80), um eine Temperatur des Transferfluids beizubehalten, das in den Wärmetauscher (51) bei oder unter einem Wärmetauscher-Temperaturwert gelangt.

11. Verfahren nach einem der Ansprüche 8 bis 10, wobei die Umgehungsanordnung (80) ein Umgehungstor (83) umfasst und das Verfahren ferner ein Betreiben des Umgehungstors (83) in einer offenen Konfiguration umfasst, in der mindestens ein Teil des Transferfluids in dem Durchgang für gekühltes Fluid (60) durch die Umgehungsanordnung (80) übertragen wird, um die Durchflussrate von Transferfluid durch die Umgehungsanordnung (80) zu steuern.

12. Verfahren nach Anspruch 11, wobei das Umgehungstor (83) in der offenen Konfiguration betrieben wird, wenn eine Kerntemperatur zwischen einer mittleren Kerntemperatur (103) und einer maximalen Kerntemperatur (101) liegt.

13. Verfahren nach Anspruch 11 oder Anspruch 12, wobei das Umgehungstor (83) zunehmend geschlossen wird und/oder betrieben wird, um die Durchflussrate von Transferfluid durch die Umgehungsanordnung (80) zu verringern, wenn sich die Kerntemperatur in Richtung der mittleren Kerntemperatur (103) verringert.

14. Verfahren nach einem der Ansprüche 8 bis 13, wobei das Fluidsystem (14) mindestens eine Verteilungsprallfläche (90, 91, 92) umfasst, die sich in dem Durchgang für erwärmtes Fluid (61) befindet, und das Verfahren ein Leiten des Transferfluids aus dem Kern (11) und auf mindestens eine Verteilungsprallfläche (90, 91, 92) umfasst, um Transferfluid zu verteilen, das den Kern (11) verlässt, bevor es in den Wärmetauscher (51) gelangt.

15. Verfahren nach Anspruch 14, wobei die mindestens eine Verteilungsprallfläche (90, 91, 92) mindestens eine Prallflächenausnehmung umfasst, wobei die Umgehungsanordnung (80) einen Umgehungsauslass (82) umfasst, der sich an dem Durchgang für erwärmtes Fluid (61) befindet, wobei das Verfahren ein Leiten von Transferfluid von der Umgehungsanordnung (80) aus dem Umgehungsauslass (82) und in die Prallflächenausnehmung umfasst, so dass die Prallflächenausnehmung Transferfluid in Richtung der gegenüberliegenden Fläche des Durchgangs für erwärmtes Fluid (61) zum Umgehungsauslass (82) verteilt.

## Revendications

1. Chaudière de stockage (10) comprenant :
un cœur (11) comprenant un milieu de stockage de chaleur (21) ;
une base (12) sur laquelle le cœur (11) est monté, et
un système de fluide (14) s'étendant à travers le cœur (11) et comprenant :
un échangeur de chaleur (51) ;
un passage de fluide refroidi (60) s'étendant de l'échangeur de chaleur (51) au cœur (11) ;
un passage de fluide chauffé (61) s'étendant du cœur (11) à l'échangeur de chaleur (51) ;
un ventilateur (52) pour faire circuler un fluide de transfert à travers le passage de fluide refroidi (60), le cœur (11), le passage de fluide chauffé (61) et l'échangeur de chaleur (51) ; et
un agencement de dérivation (80) pour transmettre sélectivement au moins une partie du fluide de transfert du passage de fluide refroidi (60) au passage de fluide chauffé (61) sans passer par le cœur (11) et mélanger un fluide de transfert refroidi avec un fluide de transfert chauffé avant que le fluide de transfert mélangé n'entre dans l'échangeur de chaleur (51), dans laquelle l'agencement de dérivation (80) est monté à l'intérieur de la base (12) ; et un système de commande configuré pour actionner le ventilateur (52), en faisant varier la vitesse du ventilateur (52), pour commander le débit de fluide de transfert à travers le cœur (11) et le système de fluide (14) et pour actionner l'agencement de dérivation (80) pour commander le débit de fluide de transfert à travers l'agencement de dérivation (80).

2. Chaudière de stockage (10) selon la revendication 1, dans laquelle l'agencement de dérivation (80) comprend une entrée de dérivation (81) située en aval de l'échangeur de chaleur (51) et en amont du cœur (11) et/ou une sortie de dérivation (82) située en aval du cœur (11) et en amont de l'échangeur de chaleur (51).

3. Chaudière de stockage (10) selon l'une quelconque des revendications précédentes, dans laquelle l'agencement de dérivation (80) comprend une porte de dérivation (83) pour commander l'écoulement de fluide de transfert à travers l'agencement de dérivation (80), dans laquelle en outre :
la porte de dérivation (83) est située dans le passage de fluide refroidi (60) en aval de l'échangeur de chaleur (51) et du ventilateur (52) ;
la porte de dérivation (83) est mobile d'une configuration fermée, dans laquelle pratiquement aucun fluide de transfert ne peut s'écouler à travers l'agencement de dérivation (80), à une configuration ouverte, dans laquelle au moins une partie de fluide de transfert dans le passage de fluide refroidi (60) peut s'écouler à travers l'agencement de dérivation (80) ; et/ou
l'agencement de dérivation (80) comprend un passage de dérivation (86), dans lequel se trouve la porte de dérivation (83) ou vers lequel mène la porte de dérivation (83), pour transmettre un fluide de transfert au passage de fluide chauffé (61).

4. Chaudière de stockage (10) selon l'une quelconque des revendications précédentes, dans laquelle le système de fluide (14) comprend en outre au moins un passage de fluide de cœur (62) s'étendant à travers le cœur (11) entre les passages de fluide refroidi et chauffé (60, 61).

5. Chaudière de stockage (10) selon l'une quelconque des revendications précédentes, dans laquelle le système de fluide (14) comprend au moins un déflecteur de distribution (90, 91, 92) situé dans le passage de fluide chauffé (61) pour distribuer un fluide de transfert sortant du cœur (11) avant d'entrer dans l'échangeur de chaleur (51).

6. Chaudière de stockage (11) selon la revendication 5, dans laquelle le au moins un déflecteur de distribution (90, 91, 92) comprend au moins un évidement de déflecteur, dans laquelle l'agencement de dérivation (80) comprend une sortie de dérivation (82) située au niveau du passage de fluide chauffé (61) et configurée pour acheminer un fluide de transfert depuis l'agencement de dérivation (80) dans l'évidement de déflecteur, dans laquelle au moins un évidement de déflecteur est configuré pour distribuer un fluide de transfert vers la face du passage de fluide chauffé (61) opposée à la sortie de dérivation (82).

7. Chaudière de stockage (10) selon la revendication 6, dans laquelle la sortie de dérivation (82) comprend des ouvertures à travers une paroi de sortie de dérivation (87) et chaque ouverture mène à au moins un évidement de déflecteur, en outre dans laquelle le ou chaque déflecteur de distribution comprend un rail allongé, qui s'évase ou rétrécit vers l'extérieur pour former le au moins un évidement de déflecteur et/ou chaque déflecteur de distribution comprend un tube ayant des ouvertures de tube à travers celui-ci.

8. Procédé de fonctionnement d'une chaudière de stockage (10), la chaudière de stockage (10) comprenant :
un cœur (11) comprenant un milieu de stockage de chaleur (21) ;
une base (12) sur laquelle le cœur (11) est monté ;
un système de fluide (14) s'étendant à travers le cœur (11) et comprenant un échangeur de chaleur (51), un passage de fluide refroidi (60), un passage de fluide chauffé (61), un ventilateur (52) et un agencement de dérivation (80), dans lequel l'agencement de dérivation (80) est monté à l'intérieur de la base (12) ; et
un système de commande configuré pour actionner le ventilateur (52), en faisant varier la vitesse du ventilateur (52), pour commander le débit de fluide de transfert à travers le cœur (11) et le système de fluide (14) et pour actionner l'agencement de dérivation (80) pour commander le débit de fluide de transfert à travers l'agencement de dérivation (80),
dans lequel le procédé comprend :
l'actionnement du ventilateur (52) pour acheminer un fluide de transfert de l'échangeur de chaleur (51) vers le cœur (11) à travers le passage de fluide refroidi (60), à travers le cœur (11) et du cœur (11) vers l'échangeur de chaleur (51) à travers le passage de fluide chauffé (61) ; et
l'actionnement de l'agencement de dérivation (80) pour transmettre au moins une partie du fluide de transfert du passage de fluide refroidi (60) à travers l'agencement de dérivation (80) vers le passage de fluide chauffé (61) sans passer à travers le cœur (11) et mélanger un fluide de transfert refroidi avec un fluide de transfert chauffé avant que le fluide de transfert mélangé n'entre dans l'échangeur de chaleur (51).

9. Procédé selon la revendication 8, comprenant en outre :
la détermination d'une sortie de puissance de chaleur souhaitée et/ou d'une température d'eau souhaitée au niveau d'un système de demande de chaleur externe (15) configuré pour recevoir de la chaleur depuis l'échangeur de chaleur (51) et/ou d'un débit de fluide de transfert souhaité à travers le cœur (11) ; et
l'actionnement du ventilateur (51) à au moins une vitesse parmi une pluralité de vitesses de ventilateur sur la base de la sortie de puissance de chaleur souhaitée, de la température d'eau souhaitée et/ou du débit de fluide de transfert souhaité.

10. Procédé selon la revendication 8 ou la revendication 9, comprenant en outre l'actionnement de l'agencement de dérivation (80) pour commander un débit de fluide de transfert à travers l'agencement de dérivation (80) afin de maintenir une température du fluide de transfert entrant dans l'échangeur de chaleur (51) à une valeur de température d'échangeur de chaleur, ou en dessous de celle-ci.

11. Procédé selon l'une quelconque des revendications 8 à 10, dans lequel l'agencement de dérivation (80) comprend une porte de dérivation (83) et le procédé comprend en outre l'actionnement de la porte de dérivation (83) dans une configuration ouverte, dans laquelle au moins une partie du fluide de transfert dans le passage de fluide refroidi (60) est transmise à travers l'agencement de dérivation (80), pour commander le débit de fluide de transfert à travers l'agencement de dérivation (80).

12. Procédé selon la revendication 11, dans lequel la porte de dérivation (83) est actionnée dans la configuration ouverte lorsqu'une température de cœur est comprise entre une température intermédiaire de cœur (103) et une température maximale de cœur (101).

13. Procédé selon la revendication 11 ou la revendication 12, dans lequel la porte de dérivation (83) est progressivement fermée et/ou actionnée pour réduire le débit de fluide de transfert à travers l'agencement de dérivation (80) à mesure que la température de cœur diminue vers la température intermédiaire de cœur (103).

14. Procédé selon l'une quelconque des revendications 8 à 13, dans lequel le système de fluide (14) comprend au moins un déflecteur de distribution (90, 91, 92) situé dans le passage de fluide chauffé (61) et le procédé comprend l'acheminement du fluide de transfert hors du cœur (11) et sur au moins un déflecteur de distribution (90, 91, 92) pour distribuer un fluide de transfert sortant du cœur (11) avant d'entrer dans l'échangeur de chaleur (51).

15. Procédé selon la revendication 14, dans lequel le au moins un déflecteur de distribution (90, 91, 92) comprend au moins un évidement de déflecteur, dans lequel l'agencement de dérivation (80) comprend une sortie de dérivation (82) située au niveau du passage de fluide chauffé (61), dans lequel le procédé comprend l'acheminement de fluide de transfert depuis l'agencement de dérivation (80) hors de la sortie de dérivation (82) et dans l'évidement de déflecteur de telle sorte que l'évidement de déflecteur distribue du fluide de transfert vers la face du passage de fluide chauffé (61) opposée à la sortie de dérivation (82).
